# EUROPEAN PATENT APPLICATION

(11) **EP 2 484 228 A1**
(43) Date of publication of application: **08.08.2012**
(21) Application number: 10820242.5
(22) Date of filing: 06.08.2010
(51) Int. Cl.: A23L 1/20

(54) **METHOD FOR SOFTENING BEANS**

(30) Priority: 29.09.2009 JP 2009224871
(71) Applicant: En Otsuka Pharmaceutical Co., Ltd., Hanamaki-shi, Iwate 0250312 (JP)
(72) Inventor: HAYASHI, Masahiro, Hanamaki-shi Iwate 025-0312 (JP)
(74) Representative: Forstmeyer, Dietmar
(86) International application number: PCT/JP2010/063412
(87) International publication number: WO 2011/040122

(57) **Abstract**

A method of softening beans and the beans softened by the said method are provided. The method uses two or more types of enzymes selected from cellulase, hemicellulase and pectinase to produce softened beans having a compressive strength of 6.0 × 10⁴ N/m² or lower and retaining the original shapes.

## Description

### Technical Field

The present invention relates to a method of softening beans, and the beans softened by the said method. More specifically, the present invention relates to a method of softening beans to a compressive strength of 6.0 × 10⁴ N/m² or lower and the beans softened by the said method.

### Background Art

Beans such as soybeans, adzuki beans and daifuku mame (white kidney beans) are nutritious foods that richly contain proteins, vitamins and minerals, and therefore commonly used in, for example, special meals for people with difficulties in mastication and/or swallowing or for the elderly who need nursing cares, as well as in oral nutritional supplements.
However, these beans are very hard and therefore require softening before they are used in the above-mentioned purposes. Conventional methods for softening the beans include soaking them in water for an extended period of time followed by cooking slowly, cooking in a pressure cooker, or braising, as well as blender treatment and retort-pouching.

A method in which beans are softened by soaking them in water containing urea, sodium carbonate or the like and braise-cooking them under pressure before they are processed into miso paste, soy sauce, natto (fermented soybeans), or other food materials (e.g. see Patent Document 1), a method of producing fast-cooking soybeans having softened tissues in which beans are soaked in a cellulase-containing aqueous solution before they are braise-cooked and dried (e.g. see Patent Document 2), and a method of producing softened soybeans in which the outer skins of the soybeans are removed before the beans are braised under a high temperature and a high pressure (e.g. see Patent Document 3) have been disclosed.
However, even with these methods of softening beans, the resulting beans could not achieve a compressive strength of 6.0 × 10⁴ N/m² or lower and were therefore not sufficiently soft for people with difficulties in mastication and/or swallowing, the elderly, or other physically challenged people, to masticate, swallow or ingest.

Some blender-treated beans and retort-pouched beans, depending on the specific methods employed, do achieve a compressive strength of 6.0 × 10⁴ N/m² or lower. However, these beans do not retain their original shapes or normal appearances, and they are therefore not very appetizing. Thus, softened beans that have a compressive strength of 6.0 × 10⁴ N/m² or lower and at the same time retain their original shapes have been desired.

### Citation List

### Patent Literature

Patent Document 1: JP H7-177860 A
Patent Document 2: JP S59-113864 A
Patent Document 3: JP 2009-95305 A

### Summary of Invention

### Technical Problem

An object of the present invention is to provide a method of softening beans and the beans softened by the said method. More specifically, an object of the present invention is to provide a method of softening beans to a compressive strength of 6.0 × 10⁴ N/m² or lower and the beans softened by the said method.

### Solution to Problem

The present inventor has conducted extensive researches to solve the above-mentioned problem and found that softened beans having a compressive strength of 6.0 × 10⁴ N/m² or lower and at the same time retaining their original shapes can be obtained by performing an enzymatic treatment using two or more types of enzymes selected from cellulase, hemicellulase and pectinase. This finding has led to the completion of the present invention.
According to the method of softening beans of the present invention, the two or more types of enzymes selected from cellulase, hemicellulase and pectinase can not only break down the internal structures of the beans but also make their outer skins brittle. Moreover, for some types of beans, removal of the outer skins followed by further heating may produce beans that are extensively softened while retaining their original shapes.

Thus, the present invention comprises the following items (1) to (6).
(1) A method of softening beans comprising subjecting the beans to an enzymatic treatment using two or more types of enzymes selected from cellulase, hemicellulase, and pectinase.
(2) The method of softening beans according to (1), comprising the following steps [1] to [3]:
   [1] soaking the beans in a solution containing two or more types of enzymes selected from cellulase, hemicellulase, and pectinase, and leaving the beans in the solution at 1 to 60°C for 30 minutes to 24 hours;
   [2] subjecting the beans from step [1] to an enzymatic reaction at 30 to 60°C for 30 minutes to 2 hours; and
   [3] heating the beans from step [2] at 100 to 130°C for 10 minutes to 2 hours.
(3) The method of softening beans according to (2), further comprising the following step [4]:
   [4] quick-freezing the beans from step [3], either directly or after coating the beans with one or more types of substances selected from thickener, emulsifier, and sugar.
(4) The method of softening beans according to (2) or (3), wherein the enzymatic reaction of step [2] are followed by a step of removing outer skins of the beans and then by step [3].
(5) Softened beans having a compressive strength of 6.0 × 10⁴ N/m² or lower obtainable by the method according to any of (1) to (5).
(6) The softened beans according to (5), wherein the type of the beans is soybeans, dry soybeans, white kidney beans, hiyoko mame (garbanzo beans), hitashi mame (green soybeans), black beans, kintoki mame (red kidney beans), or adzuki beans.
(7) A food product comprising as an ingredient one or more types of softened beans according to (5) or (6).

### Advantageous Effects of Invention

According to the method of softening beans of the present invention, it is possible to provide beans that are soft enough to be masticated, swallowed or ingested by people with difficulties in mastication and/or swallowing or by the elderly. The beans obtained by the method of softening beans according to the present invention have a compressive strength of 6.0 × 10⁴ N/m² or lower and at the same time retain the original shapes of the beans. Therefore, the said beans may be used, for example, as an ingredient in the special meals for people with difficulties in mastication and/or swallowing or for the elderly, or in the oral nutritional supplements, wherein these meals and oral supplements closely emulates normal meals.

### Description of Embodiments

The "method of softening beans" of the present invention may include any methods that use any two or more types of enzymes selected from cellulase, hemicellulase and pectinase to produce beans having a compressive strength of 6.0 × 10⁴ N/m² or lower.
The cellulase, hemicellulase and pectinase may be used in any combination of two or three. The enzymes used may be isolated from a microorganism or the like by the user or purchased from a commercial manufacturer, provided that safety of use of such enzymes in the manufacture of food products or the like has been established. Examples of the commercially available cellulase enzymes include Cellulase "Onozuka" 3S (Yakult Pharmaceutical Industry Co., Ltd.), Cellulase A "Amano" 3 (Amano Enzyme Inc.), Cellulase SS (Nagase ChemteX Corporation), and Cellulosin T3 (HBI Enzymes Inc.). Examples of the commercially available hemicellulase enzymes include Hemicellulase "Amano" 90 (Amano Enzyme Inc.), BakeZyme HS 2000 (DSM Japan), and Enzylon LQ (Rakuto Kasei Industrial Co., Ltd.). Examples of the commercially available pectinase enzymes include Pectinase PL "Amano" (Amano Enzyme Inc.), Sclase N (Mitsubishi Kagaku Foods Corporation), and Sumizyme AP-2 (Shin Nihon Chemical).

The "method of softening beans" of the present invention may, for example, comprise the following steps 1 to 3:
Step 1: soaking beans in a solution containing two or more types of enzymes selected from cellulase, hemicellulase, and pectinase, and leaving the beans in the solution at 1 to 60°C for 30 minutes to 24 hours;
Step 2: subjecting the beans from step 1 to an enzymatic reaction at 30 to 60°C for 30 minutes to 2 hours; and
Step 3: heating the beans from step 2 at 100 to 130°C for 10 minutes to 2 hours.

Moreover, in order to obtain ready-to-use softened beans that can be stored frozen, the method may further comprise the following step 4:
Step 4: quick-freezing the beans from step 3, either directly or after coating the beans with one or more types of substances selected from thickener, emulsifier, and sugar.
Thus, after the heat treatment of step 3, the beans may be directly subjected to the quick-freezing process, or they may be first coated with one or more types of substances selected from thickener, emulsifier, and sugar and then subjected to the quick-freezing.
The quick-freezing process may be performed by any known methods and any known equipments or devices, as long as the process allows the beans to reproduce similar softness, textures, and appearances to the pre-freezing states when the beans have been stored frozen for at least a few months to six months or even longer and then thawed. For example, the beans that have undergone the heat treatment of step 3 may be quick-frozen by a blast chiller at a temperature of -30 to -40°C for 30 minutes to 2 hours. It is especially preferable to quick-freeze the beans by using a blast chiller at -40°C for 2 hours.

Thawing of the quick-frozen beans may also be performed by any known methods and any known equipments or devices, as long as the thawed beans can reproduce similar softness, textures, and appearances to the pre-freezing states. For example, the frozen beans may be thawed in a steam convection oven at a temperature of 70 to 100°C and a humidity of 50 to 100% for 10 to 60 minutes. An especially preferable thawing condition is heating at a temperature of 80°C and a humidity of 100% for 30 minutes. Thawing in a steamer for 10 to 30 minutes, or for 20 minutes in particular, is also preferable. Moreover, thawing by heating in a microwave oven (500W) for 2 to 5 minutes, or for 3 minutes in particular, is also preferable.

If the beans are to be coated prior to the quick-freezing, thickener, emulsifier, or sugar may be applied to the beans by daubing, soaking, spraying, or any other suitable method, so that the beans are entirely coated with the said substance. For example, coating may be carried out by soaking the beans that have undergone the heat treatment of step 3 in an aqueous solution containing one or more types of substances selected from thickener, emulsifier, and sugar and gently shaking the mixture.

Examples of thickeners that can be used for the coating include xanthan, carrageenan, carrageenan iota, alginate, pullulan, curdlan, guar gum, tara gum, locust bean gum, tamarind seed gum, pectin, agar, gellan gum, psyllium seed gum, cellulose, carboxymethyl cellulose, soybean soluble polysaccharide, glucomannan, chitin, chitosan, gelatin, starch, and gum arabic. Examples of emulsifiers that can be used for the coating include sucrose fatty acid ester, glycerin fatty acid ester, sorbitan fatty acid ester, polyoxyethylene sorbitan fatty acid ester, lecithin, and calcium stearoyl lactylate. Examples of sugars that can be used for the coating include oligosaccharide, trehalose, sucrose, lactose, maltose and the like. These substances may be used individually or in combination.
Use of alginate, pullulan, curdlan or the like, that allows the beans to maintain similar softness, textures, and appearances with only slight hardening as compared to the pre-freezing states even after three months of freeze storing, is preferable. Moreover, use of xanthan, carrageenan, carrageenan iota, sucrose fatty acid ester, glycerin fatty acid ester, or oligosaccharide or the like, that allows the beans to maintain similar softness, textures, and appearances as compared to the pre-freezing states even after a long-term freeze storage of three to six months or even longer, is especially preferable.

If the beans are to be coated with one or more of xanthan, carrageenan iota, sucrose fatty acid ester, glycerin fatty acid ester, and oligosaccharide, it is preferable to soak the beans in an aqueous solution containing 0.1 to 0.5% xanthan, 0.5 to 1.0% carrageenan iota, 0.05 to 0.5% sucrose fatty acid ester, 0.05 to 0.5% glycerin fatty acid ester, and/or 1.0 to 5.0% oligosaccharide.

Moreover, in the "method of softening beans" of the present invention, it is also possible with some types of beans to include a step of removing the outer skins from the beans between step 2 and step 3 to obtain softened beans that are free of the outer skins that could otherwise confer a disagreeable roughness on the beans.
The enzymatic reactions and/or the heat treatment included in the above-mentioned steps may be carried out in the form of boiling, braising, or the like, and in any suitable equipments such as a commercially available steam convection oven and steam cooker.

Beans to be softened in the present invention may be any variety of beans that can be consumed by humans, and the examples of such beans include soybeans, dry soybeans, white kidney beans, garbanzo beans, green soybeans, black beans, red kidney beans, and adzuki beans.
Any beans that have been softened to a compressive strength of 6.0 × 10⁴ N/m² or lower by an enzymatic treatment involving two or more types of enzymes selected from cellulase, hemicellulase, and pectinase are included in the "softened beans" of the present invention. The "softened beans" of the present invention also include the beans that have been softened in the said way and subsequently stored refrigerated or frozen, or frozen and thawed.

The "food products" of the present invention include any foods and beverages that contain as an ingredient the beans softened by the "method of softening beans" of the present invention. Examples of such foods include processed foods such as nimame (boiled beans), bean salad, and zenzai (sweet red bean soup). Also included in the food products of the present invention are special meals and oral nutritional supplements that are made from the beans softened to a compressive strength of 6.0 × 10⁴ N/m² or lower while retaining their original shapes, which can be readily consumed by people with difficulties in mastication and/or swallowing or by the elderly and served as in normal meals.

The present invention will be explained in further details by examples below. However, the present invention is not limited to these examples.

### Examples

### Method of softening beans

### 1. Materials

### 1) Beans

Dry soybeans, white kidney beans, garbanzo beans, or hitashi mame (green soybeans) were used.

### 2) Enzyme-containing solution

Any two or more of cellulase "Onozuka" 3S (Yakult Pharmaceutical Industry Co., Ltd.), hemicellulase "Amano" 90 (Amano Enzyme Inc.) and pectinase PL "Amano" (Amano Enzyme Inc.) were combined and added in 10 mM citric acid buffer (pH 5.0) to provide an enzyme-containing solution.

### 2. Softening process

1) Beans were soaked in the enzyme-containing solution and left in the solution at 1 to 60°C for 30 minutes to 24 hours.
2) The mixture from 1) was transferred to a steam convection oven (Rational Japan) (100% humidity), and incubated at 30 to 60°C for 30 minutes to 2 hours to carry out the enzymatic reactions.
3) For some bean varieties, the beans were washed with water and their outer skins were removed.
4) The beans were removed from the mixture of 2) or 3) and transferred to water. The beans in the water were placed in a steam cooker (Miura Co. Ltd.) and heated at 100 to 130°C for 10 minutes to 2 hours to be softened.

In Examples 1 to 14 below, the beans were softened as indicated, and the compressive strengths, textures, and appearances of the resulting beans were evaluated. In Comparative Examples 1 to 8 below, the types of enzymes or the conditions for softening were changed for comparison. The evaluation of the beans were performed as follows.

### Evaluation methods

The beans from each of the Examples and Comparative Examples were directly subjected to evaluation.

### 1) Compressive strength

Compressive strengths (N/m²) were measured by using a creep meter (Yamaden Co., Ltd, "RE2-33005B"). Specifically, a plunger having a diameter of 3 mm was pressed down from the top end of a single bean through 70% of the thickness of the bean at a compression speed of 10 mm/second while a measurement was made, wherein the clearance was set in such a way that the bottom 30% of the thickness of the bean remained unintruded by the plunger. The clearance herein refers to the distance between the zero position (i.e. the bottom end of the sample) and the position of the tip of the plunger when it has been pressed into the sample the farthest. The measurements were made at a temperature of 20±24°C.

### 2) Sensory evaluation

"Softness" and "texture" sensed as the beans are crushed with the tongue and "appearance" were each evaluated according to the five-scale grading system indicated below.
Softness:
1. very hard; 2. hard; 3. somewhat hard; 4. sufficiently soft; 5. very soft Texture:
1. very poor; 2. poor; 3. somewhat poor; 4. good; 5. very good Appearance:
1. beans not retaining the original shapes at all; 2. beans disintegrated; 3. beans somewhat disintegrated; 4. beans slightly disintegrated; 5. similar to normal beans
The evaluations were made by ten people and average scores were obtained.

### [Examples 1 to 4]

1) 100 g of dry soybeans were soaked in 300 g of an enzyme-containing solution (10 mM citric acid buffer (pH 5.0) containing the enzymes shown in Table 1) and left at 4°C for 18 hours.
2) The mixture from 1) was transferred to a steam convection oven (Rational Japan) (100% humidity), and incubated at 50°C for 60 minutes to carry out the enzymatic reactions.
3) The beans from 2) were washed with water and their outer skins were removed.
4) The beans from 3) were transferred to 250 g of water. The beans in the water were placed in a steam cooker (Miura Co. Ltd.) and heated at 120°C for 60 minutes to be softened.

### [Comparative Example 1]

1) 100 g of dry soybeans were soaked in 300 g of water and left at 4°C for 18 hours.
2) The water of 1) was discarded, and the beans were freshly transferred to 250 g of water. The beans in the water were placed in a steam cooker (Miura Co. Ltd.) and heated at 120°C for 60 minutes.

### [Comparative Example 2]

1) 100 g of dry soybeans were soaked in 300 g of water and left at 4°C for 18 hours.
2) The beans from 1) were washed with water, received incisions on the outer skins, and were peeled of the outer skins individually.
3) The beans from 2) were transferred to 250 g of water. The beans in the water were placed in a steam cooker (Miura Co. Ltd.) and heated at 120°C for 60 minutes to be softened.

### [Comparative Examples 3 to 5]

1) 100 g of dry soybeans were soaked in 300 g of an enzyme-containing solution (10 mM citric acid buffer (pH 5.0) containing the enzyme shown in Table 1) and left at 4°C for 18 hours.
2) The mixture of 1) was transferred to a steam convection oven (Rational Japan) (100% humidity), and incubated at 50°C for 60 minutes to carry out the enzymatic reaction.
3) The beans from 2) were washed with water and their outer skins were removed.
4) The beans from 3) were transferred to 250 g of water. The beans in the water were placed in a steam cooker (Miura Co. Ltd.) and heated at 120°C for 1 hour to be softened.

The softening conditions and the evaluation results for Examples 1 to 4 and Comparative Examples 1 to 5 are shown in Table 1. The results show that enzymatic treatments using two or more types of enzymes selected from cellulase, hemicellulase and pectinase may produce desirable beans having compressive strengths of 6.0 × 10⁴ N/m² or lower and smooth textures.

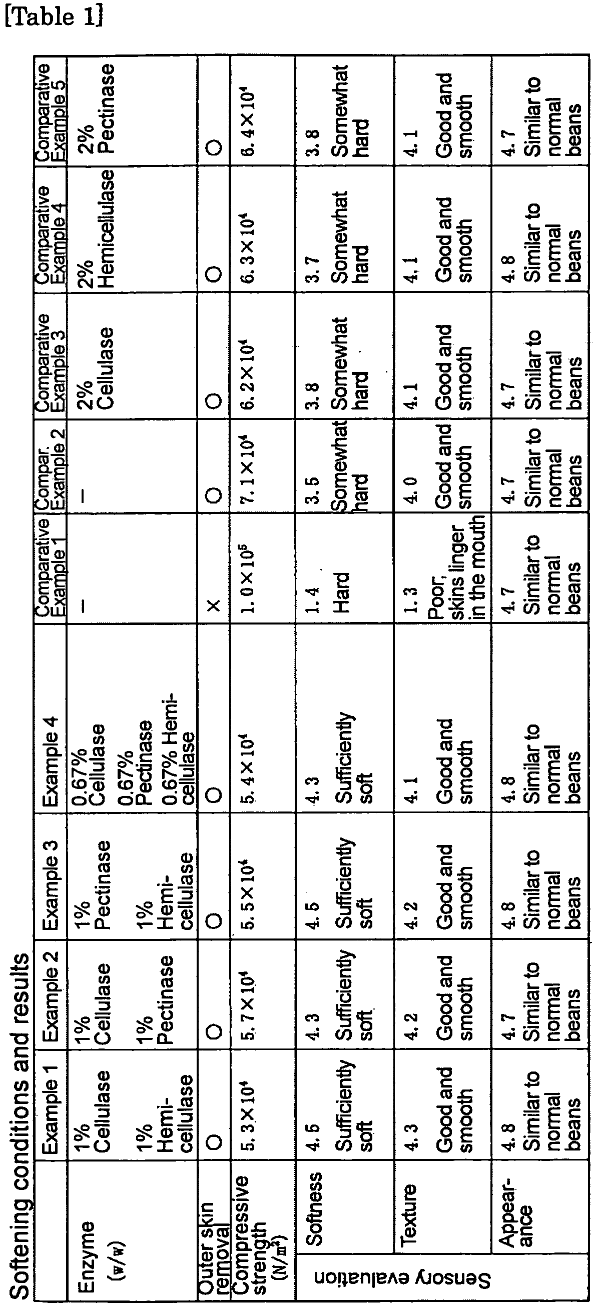

### [Examples 5 to 11 and Comparative Example 6]

Dry soybeans were softened in the similar way to Example 1 using the enzyme concentrations, enzyme types, and heating conditions indicated in Table 2. Compressive strengths, softness, textures and appearances of the resulting beans were evaluated.
The results in Table 2 show that an enzymatic treatment at 30 to 60°C for 30 minutes to 2 hours with a total enzyme concentration of at least 0.2% followed by heating at 100 to 130°C for 10 minutes to 2 hours may produce desirable beans having a compressive strength of 6.0 × 10⁴ N/m² or lower and a smooth texture.

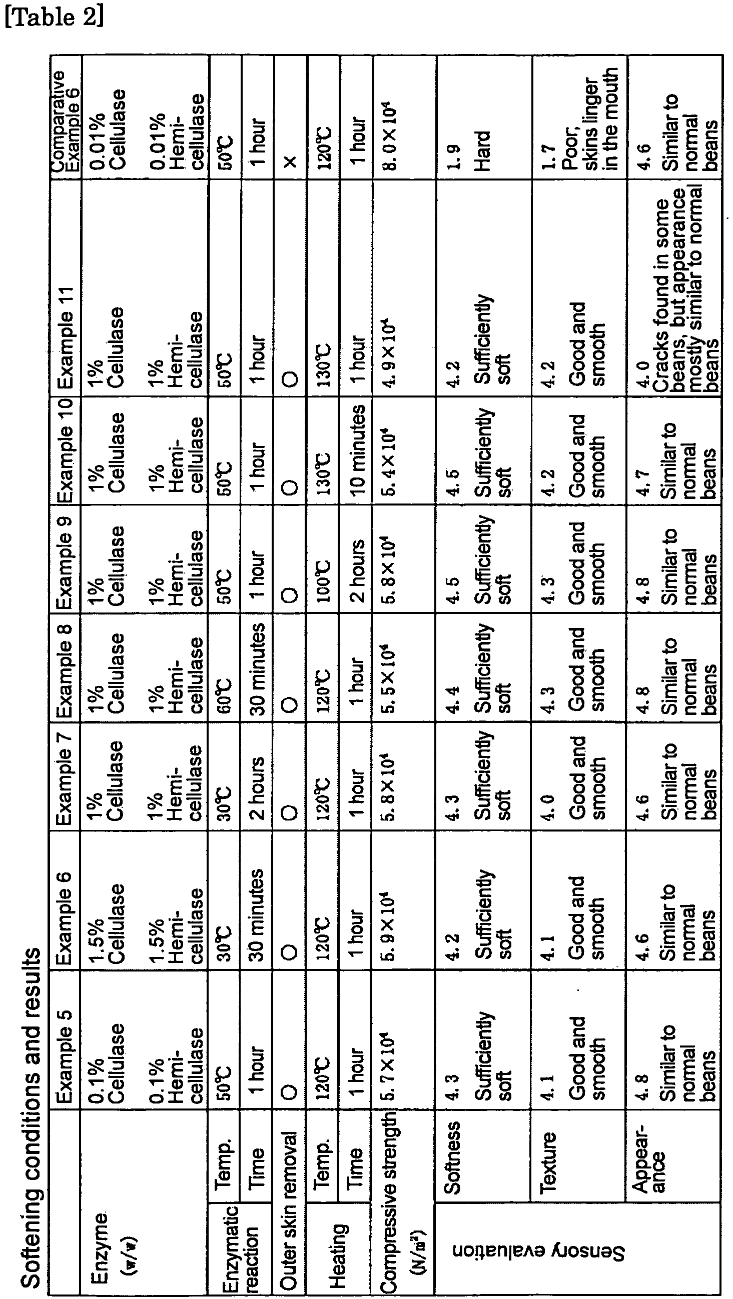

### [Comparative Example 7]

Soybeans were softened as described in the prior art (Example 2 of Patent Document 2) and evaluated. Specifically, the following process was carried out:
1) 100 g of dry soybeans were soaked in 200 g of an aqueous solution (which contained 0.2% cellulase "Onozuka" and whose pH had been adjusted to 5.0 with ascorbic acid) at 24°C for 1 hour and 45 minutes.
2) The solution of 1) was drained, and the beans were left at 32°C for 1 hour and 30 minutes, and then braised in an autoclave at 2.5 kg/cm²G for 15 minutes.
3) The beans from 2) were cooled down and dried to 18% moisture.
4) The bans from 3) were boiled in water for 20 minutes to produce boiled soybeans.
The resulting soybeans had a compressive strength of 7.5 × 10⁴ N/m². When these beans were eaten, they were somewhat hard, their outer skins left a lingering sensation in the mouth, and the texture of the beans was also poor. The beans' appearance was similar to normal beans.

### [Comparative Example 8]

Soybeans were softened and evaluated in the same way as in Comparative Example 6 except that the enzyme concentration was 2%. Specifically, the following process was carried out:
1) 100 g of dry soybeans were soaked in 200 g of an aqueous solution (which contained 2.0% cellulase "Onozuka" and whose pH had been adjusted to 5.0 with ascorbic acid) at 24°C for 1 hour and 45 minutes.
2) The solution of 1) was drained, and the beans were left at 32°C for 1 hour and 30 minutes, and then braised in an autoclave at 2.5 kg/cm²G for 15 minutes.
3) The beans from 2) were cooled down and dried to 18% moisture.
4) The beans from 3) were boiled in water for 20 minutes to produce boiled soybeans.
The resulting soybeans had a compressive strength of 6.9 × 10⁴ N/m². When these beans were eaten, they were somewhat hard, their outer skins left a lingering sensation in the mouth, and the texture of the beans was also poor. The beans' appearance was similar to normal beans.

### [Examples 12 to 14]

White kidney beans, garbanzo beans and green soybeans were subjected to softening.
1) 100 g of each variety of beans was soaked in 300 g of the enzyme-containing solution (10 mM citric acid buffer (pH 5.0) containing 0.5% cellulase and 0.5% hemicellulase) and left at 4°C for 18 hours.
2) The mixture of 1) was transferred to a steam convection oven (Rational Japan) (100% humidity), and incubated at 50°C for 60 minutes to carry out the enzymatic reactions.
3) White kidney beans and garbanzo beans were directly subjected to step 4) below. Green soybeans were washed with water and their outer skins were removed.
4) Each variety of beans was transferred to 250 g of water. The beans in the water were placed in a steam cooker (Miura Co. Ltd.) and heated at 120°C for 60 minutes to be softened.

The evaluation results for the beans obtained in Examples 12 to 14 are shown in Table 3. The results confirm that white kidney beans, garbanzo beans and green soybeans may also be softened to have compressive strengths of 6.0 × 10⁴ N/m² or lower and to have smooth textures and desirable characteristics.

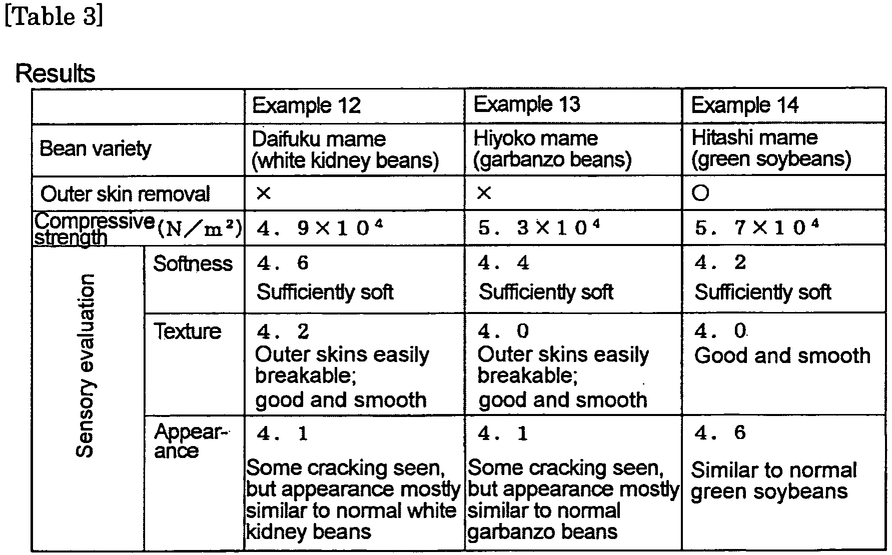

### [Example 15]

Dry soybeans were softened by the same process as in Example 1 including the enzymatic treatment and the heating, and then quick-frozen in a blast chiller (-40°C) (Fukushima Industries Corporation) for 2 hours to produce frozen softened soybeans. These frozen softened soybeans were thawed by a method according to any of 1) to 3) below, and compressive strengths, softness, textures, and appearances of the thawed beans were evaluated.
1) The frozen softened soybeans were thawed by heating them in a steam convection oven at 80°C with 100% humidity for 30 minutes.
2) The frozen softened soybeans were thawed by heating them in a steamer for 20 minutes.
3) The frozen softened soybeans were thawed by heating them in a microwave oven (500W) for 3 minutes.

### [Comparative Example 9]

Dry soybeans were softened by the same process as in Example 1 including the enzymatic treatment and the heating, and then slowly frozen in a household freezer (-20°C) overnight to produce frozen softened soybeans. These frozen softened soybeans were thawed by heating them in a steam convection oven at 80°C with 100% humidity for 30 minutes. Compressive strength, softness, texture, and appearance of the thawed beans were evaluated.

The conditions for freezing and thawing as well as the evaluation results for Example 15 and Comparative Example 9 are shown in Table 4. The results show that the soybeans that had been quick-frozen by a use of a blast chiller and then thawed each had desirable characteristics including a compressive strength of 6.0 × 10⁴ N/m² or lower and a smooth texture.

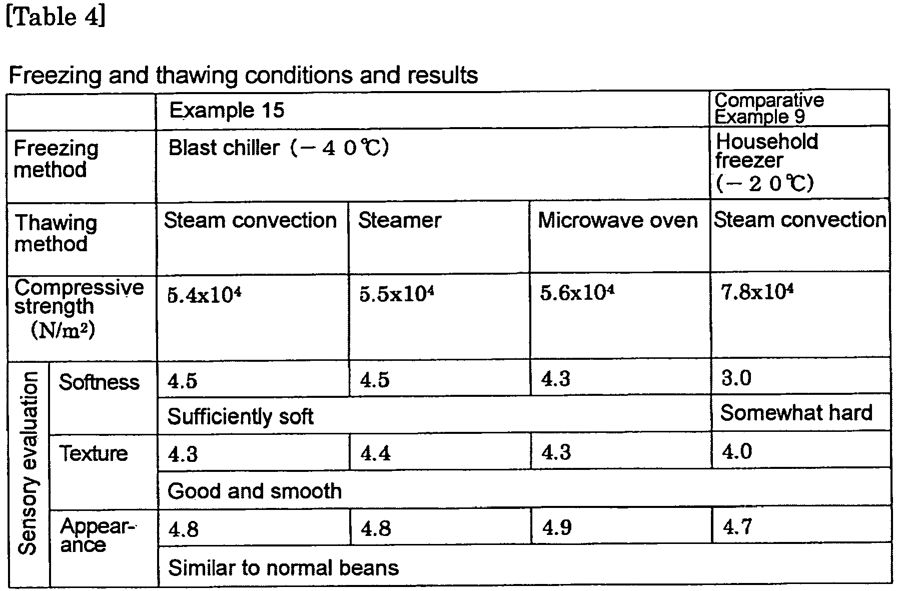

### [Examples 16 to 38]

Dry soybeans were softened by the same process as in Example 1 including the enzymatic treatment and the heating. Then, the beans were either directly quick-frozen in a blast chiller (-40°C) (Fukushima Industries Corporation) for 2 hours, or, coated with one or more of thickener, emulsifier and sugar before quick-frozen in the blast chiller (-40°C) for 2 hours, to produce frozen softened soybeans. The coating was carried out by soaking the softened dry soybeans in an aqueous solution containing one or more of the thickener, emulsifier and sugar shown in Tables 5 and 6, shaking the mixture gently, and draining the beans into a colander.
These frozen softened soybeans were stored in a household freezer (-20°C) for 1 to 6 months and then thawed by heating them in a steam convection oven at 80°C with 100% humidity for 30 minutes. The compressive strengths, softness, textures, and appearances were evaluated.

### [Comparative Example 10]

Dry soybeans were softened by the same process as in Example 1 including the enzymatic treatment and the heating, and then directly quick-frozen in a blast chiller (-40°C) (Fukushima Industries Corporation) for 2 hours to produce frozen softened soybeans. These frozen softened soybeans were stored in a household freezer (-20°C) for 3 months and then thawed by heating them in a steam convection oven at 80°C with 100% humidity for 30 minutes. The compressive strengths, softness, textures, and appearances were evaluated.

The conditions for freezing (and coating) as well as the evaluation results for Examples 16 to 38 and Comparative Example 10 are shown in Tables 5 and 6. The results show that the beans that were freeze-stored for 1 month and then thawed (Table 5) had desirable characteristics including a compressive strength of 6.0 × 10⁴ N/m² or lower and a smooth texture, regardless of whether they had been quick-frozen directly after softening or they had been coated with one or more of thickener, emulsifier and sugar after softening and before quick-freezing.
When the beans were freeze-stored for 3 months and then thawed (Table 6), the beans retained the desirable characteristics including a compressive strength of 6.0 × 10⁴ N/m² or lower and a smooth texture if they had been coated with one or more of thickener, emulsifier and sugar before they were quick-frozen. However, the beans that had been quick-frozen without receiving coating (Comparative Example 10) had a compressive strength of greater than 6.0 × 10⁴ N/m² and were somewhat hard, and suffered partial discoloration caused by freeze-storing.
The beans that had been coated with one or more of thickener, emulsifier and sugar before they were quick-frozen still retained the desirable characteristics including a compressive strength of 6.0 × 10⁴ N/m² or lower and a smooth texture even after they were freeze-stored for 6 months and thawed.

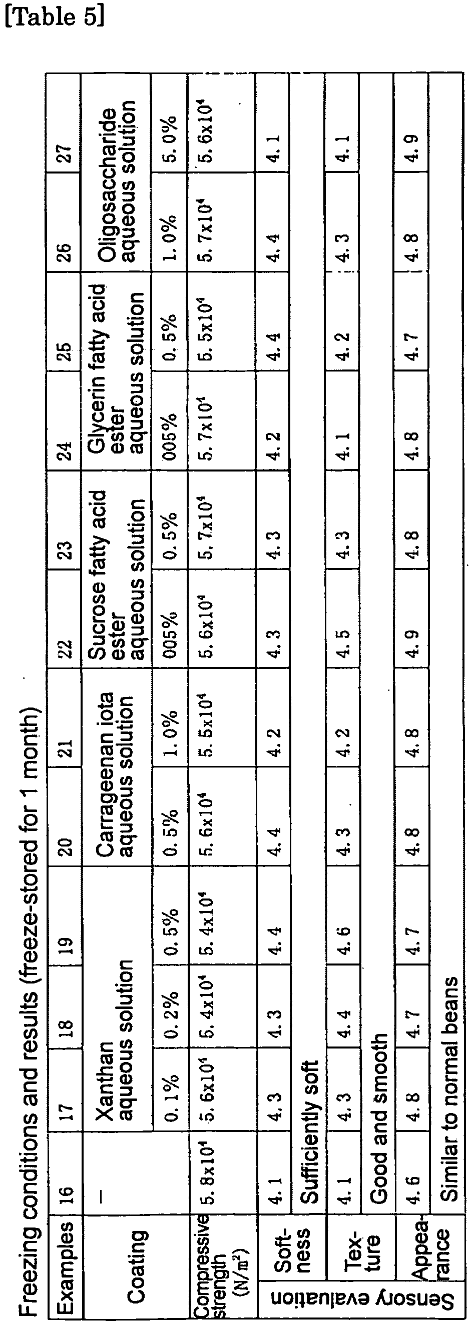

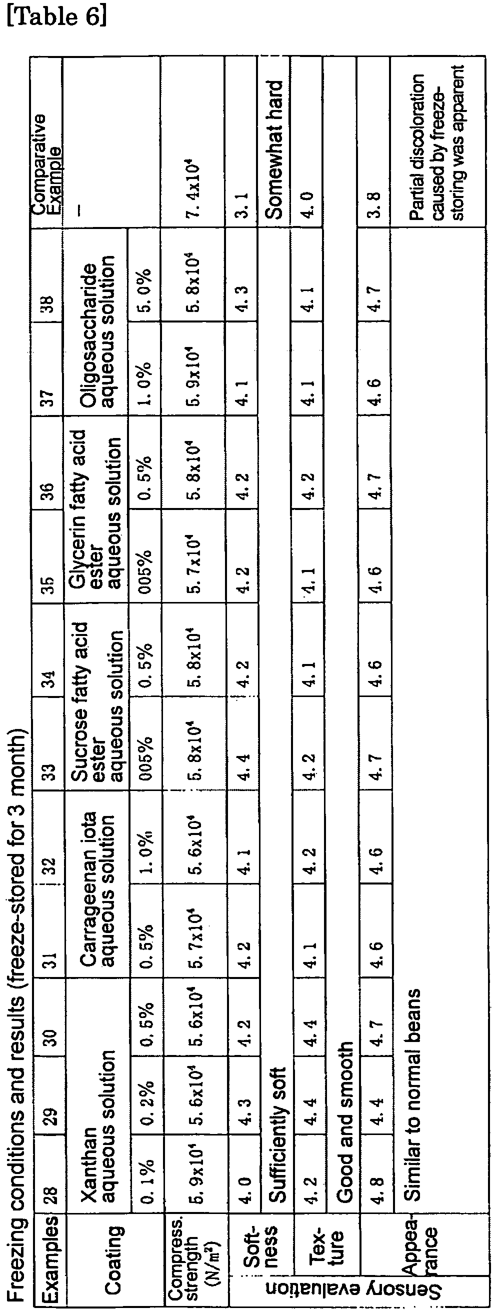

### Industrial Applicability

The beans softened according to the present invention to a compressive strength of 6.0 × 10⁴ N/m² or lower while retaining the original shapes can be used for providing special meals, oral nutritional supplements and other food products for people with difficulties in mastication and/or swallowing, the elderly, and other physically challenged people, wherein the food products are appetizing and enjoyable in a similar way to normal meals.

## Claims

1. A method of softening beans comprising subjecting the beans to an enzymatic treatment using two or more types of enzymes selected from cellulase, hemicellulase and pectinase.

2. The method of softening beans according to claim 1, comprising the following steps [1] to [3]:
[1] soaking the beans in a solution containing two or more types of enzymes selected from cellulase, hemicellulase and pectinase, and leaving the beans in the solution at 1 to 60°C for 30 minutes to 24 hours;
[2] subjecting the beans from step [1] to an enzymatic reaction at 30 to 60°C for 30 minutes to 2 hours; and
[3] heating the beans from step [2] at 100 to 130°C for 10 minutes to 2 hours.

3. The method of softening beans according to claim 2, further comprising the following step [4]:
[4] quick-freezing the beans from step [3], either directly or after coating the beans with one or more types of substances selected from thickener, emulsifier and sugar.

4. The method of softening beans according to claim 2 or 3, wherein the enzymatic reaction of step [2] are followed by a step of removing outer skins of the beans and then by step [3].

5. Softened beans having a compressive strength of 6.0 × 10⁴ N/m² or lower obtainable by the method according to any of claims 1 to 4.

6. The softened beans according to claim 5, wherein the type of the beans is soybeans, dry soybeans, white kidney beans, garbanzo beans, green soybeans, black beans, red kidney beans, or adzuki beans.

7. A food product comprising as an ingredient one or more types of softened beans according to claim 5 or 6.
